# EUROPEAN PATENT APPLICATION

(11) **EP 4 534 825 A1**
(43) Date of publication of application: **09.04.2025**
(21) Application number: 24205013.6
(22) Date of filing: 07.10.2024
(51) Int. Cl.: F02C 7/042, F01D 25/02, F02C 7/055

(54) **VARIABLE INLET GUARD FOR AN INLET OF AN AIRCRAFT ENGINE**

(30) Priority: 05.10.2023 US 202318377180
(71) Applicant: PRATT & WHITNEY CANADA CORP., Longueuil, Québec J4G 1A1 (CA)
(72) Inventor: AKCAYOZ, Eray, (01BE5) Longueuil, J4G 1A1 (CA); CUNNINGHAM, Mark, (01BE5) Longueuil, J4G 1A1 (CA); MARRANO, Roberto, (01BE5) Longueuil, J4G 1A1 (CA); BRETTE, Corentin, (01BE5) Longueuil, J4G 1A1 (CA)
(74) Representative: Dehns

(57) **Abstract**

A system (20) is provided for an aircraft. This aircraft system (20) includes an aircraft engine (24), an inlet guard (28) and an actuation system (30). The aircraft engine (24) has a flowpath (64) projecting into the aircraft engine (24) from an airflow inlet (62). The inlet guard (28) is arranged at the airflow inlet (62) and extends across the flowpath (64). The inlet guard (28) includes a first screen (74A), a second screen (74B) and a plurality of perforations (72). The first screen (74A) is adjacent and overlaps the second screen (74B). The perforations (72) project through the inlet guard (28) and are formed by the first screen (74A) and the second screen (74B). The actuation system (30) is configured to move the first screen (74A) along the second screen (74B). The movement of the first screen (74A) along the second screen (74B) changes a geometry of each of the perforations (72).

## Description

### TECHNICAL FIELD

This disclosure relates generally to an aircraft engine and, more particularly, to a guard screen for an airflow inlet of the aircraft engine.

### BACKGROUND INFORMATION

A gas turbine engine may include an inlet guard screen at an inlet into the gas turbine engine. This guard screen may prevent or reduce ingestion of foreign object debris into the gas turbine engine. While known guard screens have various advantages, there is still room in the art for improvement.

### SUMMARY

According to an aspect of the present disclosure, a system is provided for an aircraft. This aircraft system includes an aircraft engine, an inlet guard and an actuation system. The aircraft engine has a flowpath projecting into the aircraft engine from an airflow inlet. The inlet guard is arranged at the airflow inlet and extends across the flowpath. The inlet guard includes a first screen, a second screen and a plurality of perforations. The first screen is adjacent and overlaps the second screen. The perforations project through the inlet guard and are formed by the first screen and the second screen. The actuation system is configured to move the first screen along the second screen. The movement of the first screen along the second screen changes a geometry of each of the perforations.

According to another aspect of the present disclosure, another system is provided for an aircraft. This aircraft system includes a gas turbine engine, an inlet guard and an actuation system. The gas turbine engine includes a compressor section. A flowpath projects longitudinally into the gas turbine engine from an airflow inlet and longitudinally through the compressor section. The inlet guard extends laterally across the flowpath longitudinally upstream of the compressor section. The inlet guard includes a first screen, a second screen and a plurality of perforations. The first screen extends laterally along the second screen. The perforations project longitudinally through the inlet guard and are formed by the first screen and the second screen. The actuation system is configured to shift the first screen laterally along the second screen to change a geometry of each of the perforations.

According to still another aspect of the present disclosure, another system is provided for an aircraft. This aircraft system includes an aircraft engine, an inlet guard and an actuation system. The inlet guard is configured to reduce ingestion of foreign objects debris by the aircraft engine. The inlet guard includes a plurality of perforations projecting through the inlet guard. The aircraft engine is configured to pull air through the perforations. The actuation system is adapted to manipulate the inlet guard to change a size of each of the perforations.

The inlet guard may be configured as or otherwise include a screen. The actuation system may be configured to move the screen to change the size of each of the perforations.

The actuation system may also be configured to shift the second screen laterally along the first screen to change the geometry of each of the perforations.

The inlet guard may be located at the airflow inlet.

The movement of the first screen along the second screen may change a size of each of the perforations.

The movement of the first screen along the second screen may change a shape of each of the perforations.

The actuation system may be configured to: move the first screen in a first direction along the second screen; and move the first screen in a second direction along the second screen. The second direction may be angularly offset from the first direction.

The actuation system may be configured to: move the first screen in a first direction along the second screen; and move the second screen in a second direction along the first screen. The second direction may be angularly offset from the first direction.

The first screen may include a first screen element. The second screen may include a second screen element. The perforations may include a first perforation. The first perforation may be laterally bounded by and between the first screen element and the second screen element. A lateral distance between the first screen element and the second screen element may change during the movement of the first screen along the second screen.

The first screen element may be one of a plurality of first screen elements arranged together to form the first screen. The second screen element may be one of a plurality of second screen elements arranged together to form the second screen.

The inlet guard may extend circumferentially about and axially along an axis. Each of the perforations may project radially through the inlet guard.

The actuation system may be configured to move the first screen axially along the axis relative to the second screen.

The actuation system may be configured to move the first screen circumferentially about the axis relative to the second screen.

The first screen may be radially outboard of the second screen.

The second screen may be radially outboard of the first screen.

The aircraft engine may be configured as or otherwise include a gas turbine engine.

The actuation system may be configured to periodically move the first screen along the second screen to shed ice accretion on the inlet guard.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft system with a gas turbine engine.
FIG. 2 is a side sectional illustration of a portion of a variable inlet guard arranged with an actuation system.
FIG. 3 is a cross-sectional illustration of a portion of the variable inlet guard arranged with the actuation system.
FIGS. 4A-D are partial plan view illustrations of a portion of the variable inlet guard with its screens at various positions.
FIG. 5 is a schematic illustration of the variable inlet guard with a full-hoop geometry.
FIG. 6 is a schematic illustration of the variable inlet guard with a circumferentially segmented geometry.
FIG. 7 is a schematic illustration of the variable inlet guard within an inlet structure with a single inlet.
FIG. 8 is a schematic illustration of the variable inlet guard within the inlet structure with multiple inlets.

### DETAILED DESCRIPTION

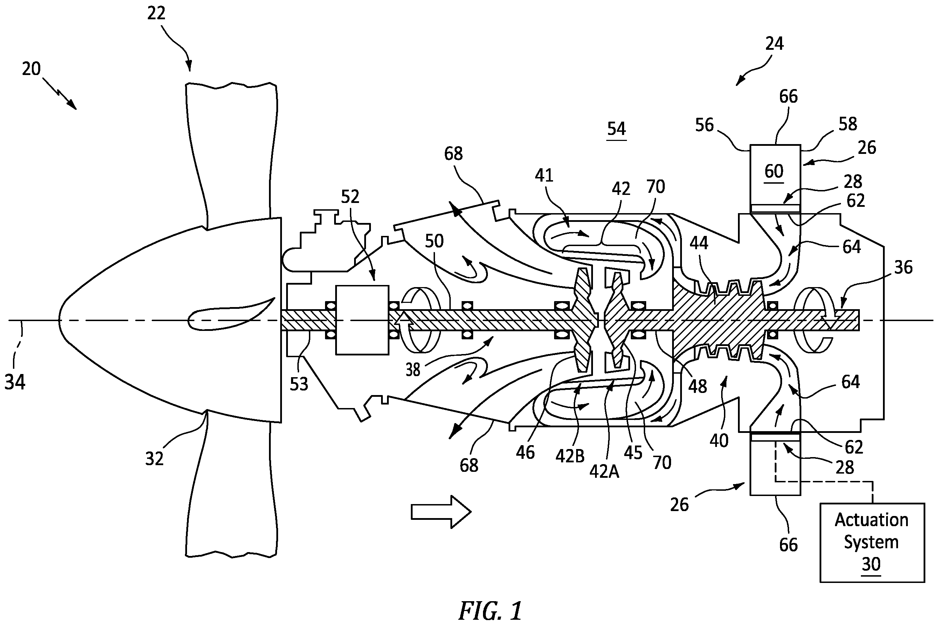

FIG. 1 illustrates a system 20 for an aircraft. This aircraft may be configured as an airplane, a helicopter, a drone (e.g., an unmanned aerial vehicle (UAV)) or any other manned or unmanned aerial vehicle or system. The aircraft system 20 of FIG. 1 includes a mechanical load 22 and a gas turbine engine 24 for powering the mechanical load 22. The aircraft system 20 also includes an (e.g., annular) airflow inlet structure 26, a variable inlet guard 28 (e.g., an inlet screen assembly) and an actuation system 30 for actuating movement of the inlet guard 28.

The mechanical load 22 includes at least (or only) one rotor 32 operable to be rotatably driven by the gas turbine engine 24. This mechanical load 22 may be configured as a propulsor for propelling the aircraft during flight. The driven rotor 32, for example, may be a bladed propulsor rotor. An example of the propulsor rotor is a propeller rotor where the gas turbine engine 24 is a turboprop gas turbine engine. Another example of the propulsor rotor is a helicopter rotor (e.g., a main rotor) where the gas turbine engine 24 is a turboshaft gas turbine engine. The mechanical load 22, however, may alternatively be configured as an electrical power generator. The driven rotor 32, for example, may be a generator rotor where the gas turbine engine 24 is an auxiliary power unit (APU). The present disclosure, however, is not limited to the foregoing exemplary driven rotor types nor the foregoing exemplary gas turbine engine types.

The gas turbine engine 24 of FIG. 1 extends axially along an axis 34. This axis 34 may be a centerline axis of the gas turbine engine 24 and/or a rotational axis of one or more rotating assemblies (e.g., 36 and 38) within the gas turbine engine 24. The gas turbine engine 24 of FIG. 1 includes a compressor section 40, a combustor section 41 and a turbine section 42. The turbine section 42 of FIG. 1 includes a high pressure turbine (HPT) section 42A and a low pressure turbine (LPT) section 42B, which LPT section 42B may also be referred to as a power turbine (PT) section and/or a free turbine section.

The compressor section 40 includes a bladed compressor rotor 44. The HPT section 42A includes a bladed high pressure turbine (HPT) rotor 45. The LPT section 42B includes a bladed low pressure turbine (LPT) rotor 46, which LPT rotor 46 may also be referred to as a power turbine (PT) rotor and/or a free turbine rotor. Each of these bladed engine rotors 44-46 includes one or more arrays of rotor blades (e.g., airfoils, vanes, etc.), where each rotor blade array is arranged circumferentially around and connected to a respective rotor base; e.g., a disk or a hub.

The compressor rotor 44 is connected to the HPT rotor 45 through a high speed shaft 48. At least (or only) the compressor rotor 44, the HPT rotor 45 and the high speed shaft 48 may collectively form or may otherwise be a part of the high speed rotating assembly 36; e.g., a high speed spool. The LPT rotor 46 is connected to a low speed shaft 50. At least (or only) the LPT rotor 46 and the low speed shaft 50 may collectively form or may otherwise be a part of the low speed rotating assembly 38. This low speed rotating assembly 38 of FIG. 1 is coupled to the driven rotor 32 through a geartrain 52 (e.g., an epicyclic geartrain) and a propulsor shaft 53. However, in other embodiments, the driven rotor 32 may be part of the low speed rotating assembly 38 where, for example, the low speed shaft 50 connects the LPT rotor 46 to the driven rotor 32 without the geartrain 52.

The inlet structure 26 is configured to direct air into the gas turbine engine 24 from an environment 54 external to the aircraft system 20 and, more generally, external to the aircraft. This inlet structure 26 may be configured as a standalone structure. Alternatively, the inlet structure 26 may be configured as a part of a housing structure for the gas turbine engine 24 and/or one or more other components of the aircraft.

The inlet structure 26 of FIG. 1 includes a (e.g., annular) first wall 56 and a (e.g., annular) second wall 58. Each of these inlet structure walls 56 and 58 extends circumferentially about (e.g., completely around) the gas turbine engine 24. The first wall 56 is spaced axially along the axis 34 from the second wall 58, thereby providing the inlet structure 26 with an inlet plenum 60; e.g., an internal volume such as an annular cavity. This inlet plenum 60 extends axially along the axis 34 within the inlet structure 26 between and to the first wall 56 and the second wall 58. The inlet plenum 60 extend radially inward (relative to the axis 34) within the inlet structure 26 to the gas turbine engine 24 and, more particularly, to an airflow inlet 62 into the gas turbine engine 24. This engine inlet 62 may be an opening (e.g., an annular orifice) in an outer case of the gas turbine engine 24 that houses the compressor section 40, the combustor section 41, the HPT section 42A and the LPT section 42B.

During gas turbine engine operation, (e.g., fresh, ambient) air from the external environment 54 enters a flowpath 64 of the aircraft system 20 and its gas turbine engine 24 through an airflow inlet 66 into the inlet structure 26. This flowpath 64 extends longitudinally in the aircraft system 20 from the structure inlet 66 to a combustion products exhaust 68 from the gas turbine engine 24. An upstream portion of the flowpath 64 is formed within and extends longitudinally through the inlet structure 26. The flowpath 64 of FIG. 1, for example, extends radially inward towards the axis 34 from the structure inlet 66, through the inlet plenum 60, to the engine inlet 62. A downstream portion of the flowpath 64 is formed within and extends longitudinally through the gas turbine engine 24. The flowpath 64 of FIG. 1, for example, projects radially inward towards the axis 34 into the gas turbine engine 24 from the engine inlet 62. The flowpath 64 subsequently extends from the engine inlet 62, sequentially through the compressor section 40, the combustor section 41, the HPT section 42A and the LPT section 42B, to the engine exhaust 68.

The flowpath 64 directs the air longitudinally (e.g., in a radial inward direction towards the axis 34) through the inlet plenum 60 and the engine inlet 62 into the gas turbine engine 24. Within the gas turbine engine 24, the air is compressed by the compressor rotor 44 and directed into a (e.g., annular) combustion chamber 70 of a (e.g., annular) combustor in the combustor section 41. Fuel is injected into the combustion chamber 70 and mixed with the compressed air to provide a fuel-air mixture. This fuel-air mixture is ignited and combustion products thereof flow through and sequentially cause the HPT rotor 45 and the LPT rotor 46 to rotate before being exhausted from the gas turbine engine 24 through the engine exhaust 68 into the external environment 54. The rotation of the HPT rotor 45 drives rotation of the compressor rotor 44 and, thus, compression of the air received through the inlet plenum 60 and the engine inlet 62. The rotation of the LPT rotor 46 drives rotation of the driven rotor 32. Where the driven rotor 32 is a propulsor rotor such as the propeller rotor shown in FIG. 1, the rotation of the driven rotor 32 propels air outside of the gas turbine engine 24 in an aft direction along the axis 34 to provide forward aircraft flight. Where the driven rotor 32 is the generator rotor, the rotation of the driven rotor 32 drives the electrical power generator to generate electrical power.

Under certain circumstances, the air entering the flowpath 64 through the structure inlet 66 may include foreign object debris. For example, during winter aircraft operation, some or all of an ice accumulation on an exterior surface of the aircraft and its aircraft system 20 may break off and be ingested by the flowpath 64 through the structure inlet 66. Large pieces of ice may cause damage to the gas turbine engine 24 (e.g., to the blades of the compressor rotor 44 and/or vanes within the compressor section 40) if allowed to move freely with the incoming air along the flowpath 64 into the gas turbine engine 24 and its compressor section 40. Other relatively large foreign object debris such as a bird may also cause damage to the gas turbine engine 24 (e.g., to the blades of the compressor rotor 44 and/or vanes within the compressor section 40) if allowed to move freely with the incoming air along the flowpath 64 into the gas turbine engine 24 and its compressor section 40.

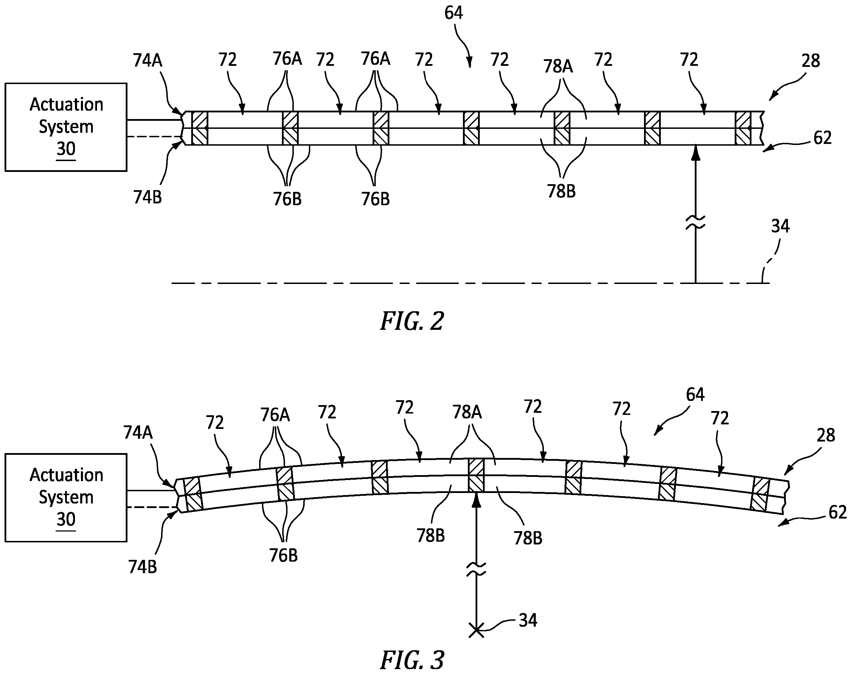

To prevent or reduce foreign object debris related damage, the inlet guard 28 is arranged along the flowpath 64 (e.g., anywhere) longitudinally upstream of the compressor section 40 and its compressor rotor 44. The inlet guard 28 of FIG. 1, for example, is arranged at (e.g., on, adjacent or proximate) the engine inlet 62. More particularly, the inlet guard 28 of FIG. 1 is disposed in (or adjacent) the inlet plenum 60 radially outboard of (or inline with) the engine inlet 62. This inlet guard 28 extends axially across the flowpath 64 from the first wall 56 to the second wall 58. The inlet guard 28 also extends circumferentially about (e.g., completely around) the axis 34. The inlet guard 28 of FIG. 1 thereby laterally overlaps (e.g., completely axially and/or circumferentially covers) the engine inlet 62. This inlet guard 28 includes a plurality of perforations 72 (see FIGS. 2 and 3). These perforations 72 fluidly couple a portion of the flowpath 64 longitudinally upstream of (e.g., radially outboard of) the inlet guard 28 with a portion of the flowpath 64 longitudinally downstream of (e.g., radially inboard of) the inlet guard 28. With this arrangement, the inlet guard 28 filters (e.g., all of) the air flowing longitudinally within the flowpath 64 before entering the compressor section 40 and, more generally, the gas turbine engine 24. The inlet guard 28 may thereby block the foreign object debris from moving along the flowpath 64 into the gas turbine engine 24 and its compressor section 40.

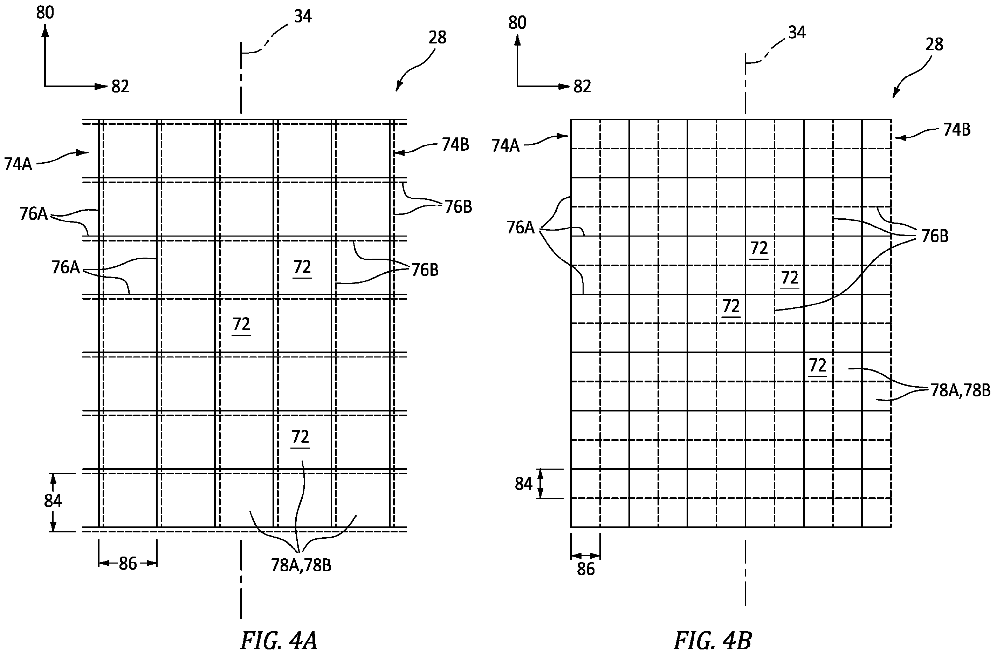

Referring to FIGS. 2 and 3, the inlet guard 28 includes an upstream screen 74A and a downstream screen 74B. Referring to FIGS. 4A-D, each of the inlet guard screens 74A, 74B (generally referred to as "74") includes a plurality of screen elements 76A, 76B (generally referred to as "76"); e.g., elongated members, ligaments, etc. These screen elements 76 are arranged in a porous web structure; e.g., a lattice structure. The screen elements 76, for example, are woven together, overlapped or otherwise arranged and interconnected into a mesh that at least partially or completely forms the respective inlet guard screen 74. With this arrangement, each inlet guard screen 74A, 74B is formed with a plurality of windows 78A, 78B (generally referred to as "78"); e.g., through-holes, ports, etc. Each of these windows 78A, 78B may be formed by and extend axially between a respective axially adjacent pair of the screen elements 76A, 76B. Each of the windows 78A, 78B may also be formed by and extend circumferentially between a respective circumferentially adjacent pair of the screen elements 76A, 76B. Referring to FIG. 4A, each window 78 may have a polygonal (e.g., rectangular) cross-sectional geometry when viewed, for example, in a reference plane perpendicular to a centerline of the respective window 78 (e.g., plane of FIG. 4A). The cross-sectional geometry (e.g., shape, size, etc.) of each window 78 in the upstream screen 74A may be the same as the cross-sectional geometry (e.g., shape, size, etc.) of each window in the downstream screen 74B. Alternatively, the cross-sectional geometries of the windows 78 in the same inlet guard screen 74 and/or between the inlet guard screens 74 may be varied. The present disclosure, however, is not limited to such exemplary relationships between the inlet guard screens 74 nor to such exemplary window geometries.

Referring to FIGS. 2 and 3, each of the inlet guard screens 74 may extend laterally (e.g., axially and/or circumferentially) across the flowpath 64. The upstream screen 74A of FIGS. 2 and 3 is disposed longitudinally upstream of (e.g., radially outboard of) the downstream screen 74B. This upstream screen 74A is also disposed longitudinally (e.g., radially) adjacent the downstream screen 74B, where the inlet guard screens 74 may engage (e.g., contact) one another or may be (e.g., slightly) spaced from one another.

The actuation system 30 is configured to laterally move (e.g., translate, slide, rotate, etc.) one or more of the inlet guard screens 74 between an open arrangement (e.g., see FIGS. 2, 3 and 4A) and one or more closed arrangements (e.g., see FIGS. 4B-D). The inlet guard screen(s) 74 of FIG. 4A, for example, may be moved along a first lateral direction 80; e.g., axially along the axis 34. The inlet guard screen(s) 74 may also or alternatively be moved along a second lateral direction 82 (e.g., circumferentially about the axis 34), which second lateral direction 82 is angularly offset from (e.g., perpendicular to, acutely angled to, etc.) the first lateral direction 80. For ease of description, the actuation system 30 is described below as laterally moving the upstream screen 74A relative to the downstream screen 74B, and the downstream screen 74B is described as being a stationary screen. The actuation system 30, however, may alternatively be configured to laterally move the downstream screen 74B relative to the upstream screen 74A, and the upstream screen 74A may be the stationary screen. Still alternatively, the actuation system 30 may be configured to laterally move both the upstream screen 74A and the downstream screen 74B one or more common (the same) or different (e.g., angularly offset) lateral directions (e.g., 80 and/or 82).

When the inlet guard screens 74 are in the open arrangement of FIG. 4A, each of the upstream windows 78A in the upstream screen 74A may be completely (or substantially) laterally aligned with a respective one of the upstream windows 78A in the downstream screen 74B. Similarly, each of the downstream windows 78B in the downstream screen 74B may be completely (or substantially) laterally aligned with a respective one of the upstream windows 78A in the upstream screen 74A. However, when the inlet guard screens 74 are in one of the closed arrangements of FIGS. 4B-D, each of the upstream windows 78A in the upstream screen 74A is partially laterally aligned with (e.g., partially offset from) at least one or more of the downstream windows 78B in the downstream screen 74B. Similarly, each of the downstream windows 78B in the downstream screen 74B is partially laterally aligned with (e.g., partially offset from) at least one or more of the upstream windows 78A in the upstream screen 74A.

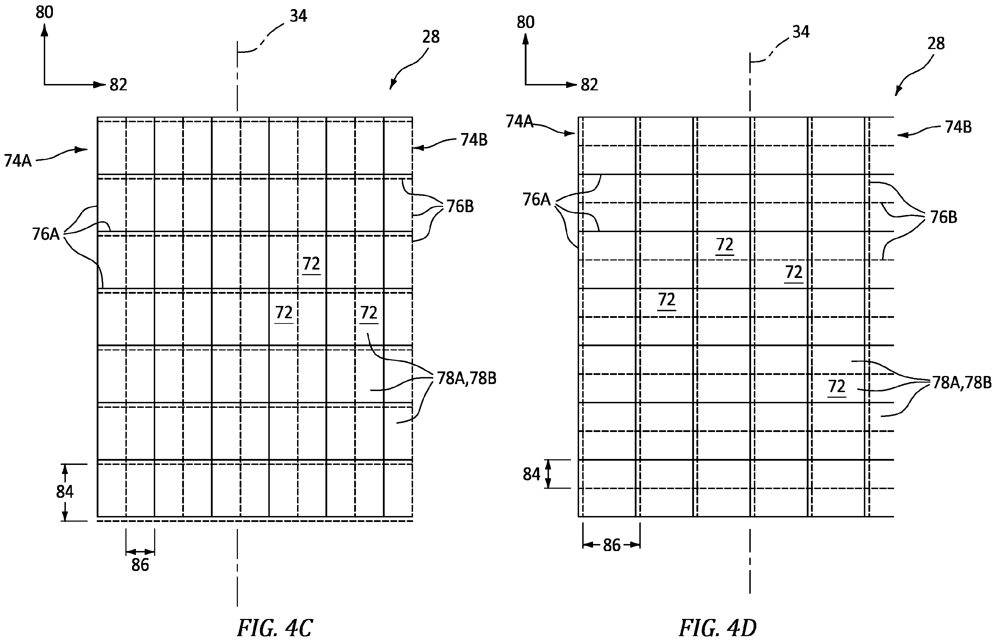

Referring to FIGS. 2-4D, the inlet guard screens 74 and their screen elements 76 collectively form the perforations 72 through the inlet guard 28. For example, when each upstream window 78A is completely (or substantially) aligned with a respective one of the downstream windows 78B (e.g., see FIGS. 2, 3 and 4A), each aligned pair of windows 78A and 78B may form a respective one of the perforations 72. However, when each upstream window 78A is partially offset from (e.g., slightly misaligned with) a respective one of the downstream windows 78B (e.g., see FIGS. 4B-D), each perforation 72 may be located between and laterally (e.g., axially or circumferentially) bound by a respective one of the upstream screen elements 76A of the upstream screen 74A and a respective laterally adjacent one of the downstream screen element 76B of the downstream screen 74B. The geometries (e.g., shapes, sizes, etc.) of the perforations 72 may thereby be changed by laterally moving the inlet guard screens 74A and 74B relative to one another to align and misalign the windows 78A and 78B. For example, the shapes of the perforations 72 with the open inlet guard screen arrangement of FIG. 4A are different than the shapes of the perforations 72 with the various closed inlet guard screen arrangements of FIG. 4C and 4D. In another example, the sizes (e.g., axial width 84, circumferential width 86, cross-sectional area, etc.) of the perforations 72 with the open inlet guard screen arrangement of FIG. 4A are different than the sizes of the perforations 72 with the various closed inlet guard screen arrangements of FIG. 4B, 4C and/or 4D.

The actuation system 30 may actuate the inlet guard 28 based on various operational parameters. These operational parameter may include, but are not limited to, likelihood of encountering foreign object debris, likelihood of encountering icing conditions, airflow requirements to the gas turbine engine 24, etc. For example, when the aircraft is flying at cruise, there may be a relatively low likelihood of ingesting foreign object debris into the flowpath 64. The inlet guard screens 74 may therefore be disposed in the open arrangement of FIG. 4A to increase the perforation size and thereby increase airflow / decrease resistance across the inlet guard 28. By contrast, when the aircraft is taking off or landing and/or there is a high likelihood of icing, there may be a relatively high likelihood of ingesting foreign object debris into the flowpath 64. The inlet guard screens 74 may therefore be disposed in one of the closed arrangements of FIGS. 4B-D to decrease the perforation size and thereby increase the filtering effectiveness of the inlet guard 28. Moreover, when there is a high likelihood of forming ice accretions on the inlet guard 28, the actuation system 30 may periodically move (e.g., shift) the inlet guard screens 74 relative to one another to shed and/or breakup an ice accretions on the inlet guard 28. The relative movement between the inlet duct screens may thereby at least partially restore or maintain an open area of the inlet guard 28.

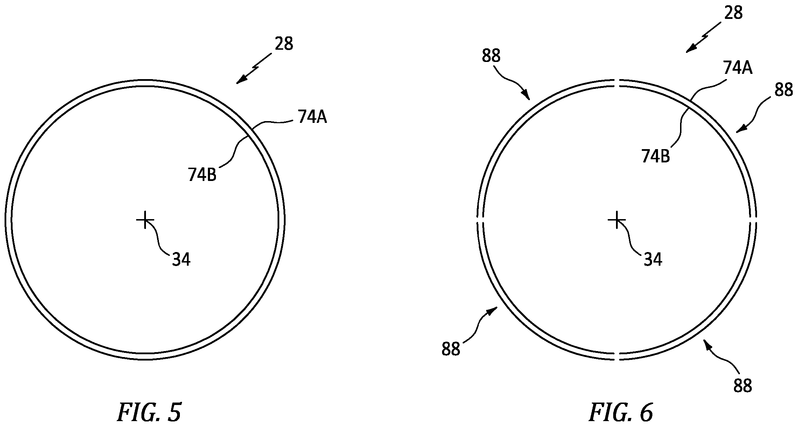

In some embodiments, referring to FIG. 5, the inlet guard 28 and each of its inlet guard screens 74 may have a full-hoop (e.g., tubular) body. In other embodiments however, referring to FIG. 6, the inlet guard 28 may be configured into multiple arcuate segments 88. One or more of these arcuate segments 88 may each include its own set of adjustable inlet guard screens 74.

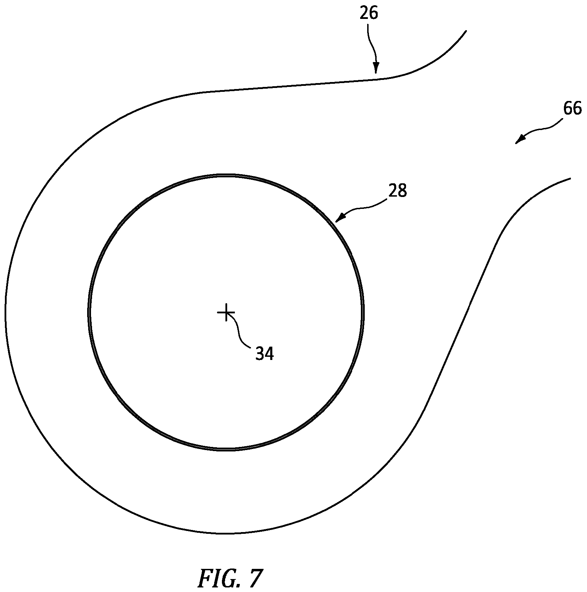

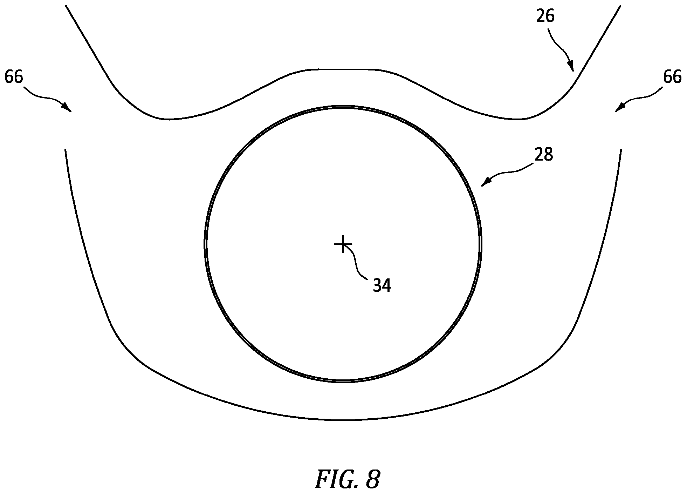

In some embodiments, referring to FIG. 7, the inlet structure 26 may include a single structure inlet 66 into the inlet plenum 60. In other embodiments however, referring to FIG. 8, the inlet structure 26 may include multiple of the structure inlets 66 into the inlet plenum 60.

The aircraft system 20 is described above as including the gas turbine engine 24. The present disclosure, however, is not limited to including such an exemplary type of aircraft engine. The aircraft system 20, for example, may alternatively include a reciprocating piston engine, a rotary engine (e.g., a Wenkel engine) or any other type of aircraft engine which may receive its incoming air through an actuatable variable inlet guard 28 as generally described above.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (20) for an aircraft, comprising:
an aircraft engine (24) with a flowpath (64) projecting into the aircraft engine (24) from an airflow inlet (62);
an inlet guard (28) arranged at the airflow inlet (62) and extending across the flowpath (64), the inlet guard (28) including a first screen (74A), a second screen (74B) and a plurality of perforations (72), the first screen (74A) adjacent and overlapping the second screen (74B), and the plurality of perforations (72) projecting through the inlet guard (28) and formed by the first screen (74A) and the second screen (74B); and
an actuation system (30) configured to move the first screen (74A) along the second screen (74B), wherein the movement of the first screen (74A) along the second screen (74B) changes a geometry of each of the plurality of perforations (72).

2. The system (20) of claim 1, wherein the movement of the first screen (74A) along the second screen (74B) changes:
a size of each of the plurality of perforations (72); and/or
a shape of each of the plurality of perforations (72).

3. The system (20) of claim 1 or 2, wherein the actuation system (30) is configured to move the first screen (74A) in a first direction (80) along the second screen (74B); and move the first screen (74A) in a second direction (82) along the second screen (74B), wherein the second direction (82) is angularly offset from the first direction (80).

4. The system (20) of claim 1 or 2, wherein the actuation system (30) is configured to move the first screen (74A) in a first direction (80) along the second screen (74B); and move the second screen (74B) in a second direction (82) along the first screen (74A), wherein the second direction (82) is angularly offset from the first direction (80).

5. The system (20) of any of claims 1 to 3, wherein the second screen (74B) is a stationary screen.

6. The system (20) of any preceding claim, wherein
the first screen (74A) comprises a first screen element (76A);
the second screen (74B) comprises a second screen element (76B);
the plurality of perforations (72) comprise a first perforation, and the first perforation is laterally bounded by and between the first screen element (76A) and the second screen element (76B); and
a lateral distance between the first screen element (76A) and the second screen element (76B) changes during the movement of the first screen (74A) along the second screen (74B), optionally wherein the first screen element is one of a plurality of first screen elements (76A) arranged together to form the first screen (74A) and the second screen element is one of a plurality of second screen elements (76B) arranged together to form the second screen (74B).

7. The system (20) of any preceding claim, wherein
the inlet guard (28) extends circumferentially about and axially along an axis (34); and
each of the plurality of perforations (72) projects radially through the inlet guard (28).

8. The system (20) of claim 7, wherein:
the actuation system (30) is configured to move the first screen (74A) axially along the axis (34) relative to the second screen (74B); or
the actuation system (30) is configured to move the first screen (74A) circumferentially about the axis (34) relative to the second screen (74B).

9. The system (20) of claim 7 or 8, wherein:
the first screen (74A) is radially outboard of the second screen (74B); or
the second screen (74A) is radially outboard of the first screen (74B).

10. The system (20) of any preceding claim, wherein the aircraft engine (24) comprises a gas turbine engine (24).

11. The system (20) of any preceding claim, wherein the actuation system (30) is configured to periodically move the first screen (74A) along the second screen (74B) to shed ice accretion on the inlet guard (28).

12. A system (20) for an aircraft, comprising:
a gas turbine engine (24) including a compressor section (40), a flowpath (64) projecting longitudinally into the gas turbine engine (24) from an airflow inlet (62) and longitudinally through the compressor section (40);
an inlet guard (28) extending laterally across the flowpath (64) longitudinally upstream of the compressor section (40), the inlet guard (28) including a first screen (74A), a second screen (74B) and a plurality of perforations (72), the first screen (74A) extending laterally along the second screen (74B), and the plurality of perforations (72) projecting longitudinally through the inlet guard (28) and formed by the first screen (74A) and the second screen (74B); and
an actuation system (30) configured to shift the first screen (74A) laterally along the second screen (74B) to change a geometry of each of the plurality of perforations (72).

13. The system (20) of claim 12, wherein:
the actuation system (30) is further configured to shift the second screen (74B) laterally along the first screen (74A) to change the geometry of each of the plurality of perforations (72); and/or
the inlet guard (28) is located at the airflow inlet (62).

14. A system (20) for an aircraft, comprising:
an aircraft engine (24);
an inlet guard (28) configured to reduce ingestion of foreign objects debris by the aircraft engine (24), the inlet guard (28) comprising a plurality of perforations (72) projecting through the inlet guard (28), and the aircraft engine (24) configured to pull air through the plurality of perforations (72); and
an actuation system (30) adapted to manipulate the inlet guard (28) to change a size of each of the plurality of perforations (72).

15. The system (20) of claim 14, wherein
the inlet guard (28) comprises a screen; and
the actuation system (30) is configured to move the screen to change the size of each of the plurality of perforations (72).
